# FASCICULE DE BREVET EUROPEEN

(11) **EP 1 833 339 B1**
(45) Date de publication et mention de la délivrance du brevet: **04.03.2009**
(21) Numéro de dépôt: 05826563.8
(22) Date de dépôt: 14.12.2005
(51) Int. Cl.: A47J 31/44

(54) **MACHINE A CAFE MUNIE D'UNE BUSE VAPEUR**
KAFFEEMASCHINE MIT EINER DAMPFDÜSE
COFFEE MACHINE PROVIDED WITH A STEAM NOZZLE

(30) Priorité: 21.12.2004 FR 0413662
(43) Date de publication de la demande: 19.09.2007
(73) Titulaire: SEB SA, 69130 Ecully (FR)
(72) Inventeur: BAZIN, Nicolas, F-14200 Herouville Saint Clair (FR); MORIN, Gilles, F-14210 Sainte Honorine du Fay (FR); TURPIN, Romain, F-14210 Sainte Honorine du Fay (FR); BRODIN, Didier, F-14790 Verson (FR)
(74) Mandataire: Kiehl, Hubert
(86) Numéro de dépôt international: PCT/FR2005/003163
(87) Numéro de publication internationale: WO 2006/067313

(56) Documents cités:
- EP-A- 1 051 940
- EP-A- 1 199 016
- DE-U1- 29 810 291
- US-A- 5 638 740

## Description

La présente invention se rapporte à une machine à café munie d'une buse de sortie de vapeur. Plus particulièrement, la présente invention concerne une machine à café comportant un boîtier comprenant au moins une sortie de café par laquelle une infusion de café est susceptible de s'écouler dans une tasse, un générateur de vapeur, et une buse de sortie de vapeur mobile par rapport au boîtier et reliée au générateur de vapeur, ladite buse présentant une extrémité libre susceptible d'être plongée dans la tasse.

Il est connu de prévoir une buse de sortie de vapeur sur les machines à café, et notamment sur les machines à café de type espresso. La buse permet d'injecter de la vapeur notamment dans du lait contenu dans une tasse, pour réchauffer celui-ci en vue de la préparation d'un café au lait, appelé latte, ou pour émulsionner le lait afin de préparer un cappuccino. Il est possible d'utiliser un accessoire permettant d'entraîner de l'air avec la vapeur dans le lait, de manière à ce que l'opération d'émulsion du lait ne requiert pas une dextérité particulière.

Une machine à café munie d'une buse de sortie de vapeur permettant d'émulsionner le lait est connue du document US-A-5 638 740. L'avantage de ce.type de buse dans lequel ne circule que de la vapeur, et éventuellement de l'air, est que leur entretien est très simple étant donné que l'on peut se contenter d'essuyer l'extrémité de la buse avec un chiffon humide pour éliminer les traces de lait qui peuvent subsister après utilisation. En effet, il existe des dispositifs de préparation de lait chaud ou de mousse de lait dans lesquels le lait est aspiré par effet Venturi dans une chambre interne au boîtier de la machine ou réalisée dans un accessoire monté à l'extrémité de la buse. Ces dispositifs permettent de délivrer le lait directement à la sortie de la buse, mais ils présentent l'inconvénient majeur de nécessiter un démontage ou un système de rinçage complexe pour éliminer le lait subsistant dans la chambre interne et les conduits.

Toutefois, les machines à café connues et munies d'une buse de sortie de vapeur ne sont pas entièrement satisfaisantes car elles nécessitent de nombreuses manipulations. En effet, l'utilisateur doit manipuler la tasse pour placer la buse de vapeur dans celle-ci, puis commander l'injection de vapeur pour émulsionner ou réchauffer le lait tout en tenant la tasse à la main, ou en plaçant celle-ci sur un support qui a été préalablement ajusté comme décrit dans le document US-A-5 638 740, puis, une fois cette opération terminée, manipuler de nouveau la tasse, qui peut être relativement chaude, pour placer celle-ci sous les sorties de café et enfin commander la production de café.

La présente invention a pour but d'améliorer les machines à café existantes en limitant le nombre de manipulations de la tasse à effectuer lors de la préparation d'un café au lait ou d'un cappuccino, tout en conservant la facilité d'entretien des machines à café munies d'une buse de sortie de vapeur.

A cet effet, la présente invention a pour objet une machine à café du type précité, caractérisée en ce que l'extrémité libre de la buse est susceptible d'être amenée dans l'espace situé sous la sortie de café et d'être déplacée par translation entre une position relevée dans laquelle ladite extrémité libre est au moins sensiblement au niveau de la sortie de café, et une position abaissée dans laquelle ladite extrémité libre est susceptible de plonger dans la tasse positionnée de manière à recevoir l'infusion de café.

Ainsi, l'utilisateur place la tasse, partiellement remplie de lait, sous la sortie de café de manière habituelle, et commande, de façon manuelle ou selon une séquence automatisée, l'abaissement de l'extrémité libre de la buse pour plonger celle-ci dans le lait, l'injection de vapeur dans le lait, la remontée de l'extrémité libre de la buse en position relevée, puis la production de café qui s'écoule dans la tasse depuis la sortie de café. Ces opérations ne nécessitent donc pas de déplacer la tasse au cours de la préparation d'un café au lait ou d'un cappuccino. De plus, étant donné que le lait ne circule pas dans la buse, il n'est pas nécessaire que l'utilisateur effectue une opération de nettoyage de la buse après la préparation de la boisson.

Dans des modes de réalisation préférés de l'invention, on a recours, en outre, à l'une et/ou à l'autre des dispositions suivantes :
- la buse de sortie de vapeur est mobile selon un axe sensiblement vertical agencé à proximité de la sortie de café ;
- le boîtier comprend deux sorties de café, et la buse est située sensiblement dans le plan vertical médian séparant les deux sorties de café ;
- le boîtier contient un dispositif de guidage de la buse comprenant un guide vertical le long duquel la buse est montée mobile, ladite buse en position abaissée faisant saillie à travers une ouverture pratiquée dans ledit boîtier ; ainsi, le mécanisme de déplacement de la buse et la majeure partie de la buse lorsqu'elle est en position relevée, sont protégés à l'intérieur du boîtier ;
- la course verticale de la buse de la position relevée vers la position abaissée, est adaptée pour que l'extrémité libre de la buse soit située à une distance minimale déterminée du plan destiné à recevoir la tasse, ladite distance minimale étant de préférence comprise entre 10 et 20 mm, de manière à ce que l'extrémité libre de la buse ne vienne pas en appui contre le fond de la tasse ;
- un bouton de commande manuelle est monté mobile sur le boîtier et est relié à la buse par un dispositif de commande adapté à déplacer la buse au moins de la position relevée à la position abaissée lorsque le bouton de commande est actionné ; ainsi, grâce au dispositif de commande, le bouton de commande peut être placé à un endroit éloigné de la buse et facile d'accès ;
- le dispositif de commande est adapté à entraîner un déplacement amplifié de la buse par rapport au déplacement du bouton de commande, limitant ainsi l'amplitude de mouvement que doit effectuer l'utilisateur ;
- le boîtier présente une face frontale sur laquelle est pratiquée une fente sensiblement verticale le long de laquelle coulisse le bouton de commande, le passage du bouton de commande d'une position haute à une position basse entraînant le déplacement de la buse de la position relevée à la position abaissée, ce qui rend plus intuitif la commande du déplacement de la buse pour l'utilisateur ;
- la buse est rappelée en position relevée par un moyen de rappel élastique, et est adaptée à coopérer avec un dispositif de retenue électromagnétique, ledit dispositif de retenue étant adapté à maintenir la buse en position abaissée et à libérer la buse à la suite de la réception d'un signal émis par un premier dispositif de contrôle, ce qui permet de réaliser un relevage automatique de la buse de sortie de vapeur avant la production de café ; et
- un moyen de détection de la position abaissée de la buse est relié à un second dispositif de contrôle commandant la sortie de vapeur par la buse, ledit second dispositif de contrôle étant adapté à interdire la sortie de vapeur lorsque le moyen de détection indique que la buse n'est pas en position abaissée.

D'autres caractéristiques et avantages de l'invention apparaîtront au cours de la description qui va suivre, donnés à titre d'exemples non limitatifs, en référence aux dessins annexés dans lesquels :
- la figure 1 est une vue partielle en perspective arrachée d'une machine à café munie d'une buse de sortie de vapeur selon l'invention, dans laquelle la buse est en position relevée ;
- la figure 2 est une vue en perspective analogue à la figure 1 dans laquelle la buse de sortie de vapeur est en position abaissée ;
- la figure 3 est une vue en coupe simplifiée selon la ligne III-III de la figure 1, dans laquelle un premier dispositif de commande de la buse de sortie de vapeur et une tasse partiellement remplie de lait sont visibles ;
- la figure 4 est une vue schématique de dessous de la buse de sortie de vapeur et des sorties de café de la machine représentée à la figure 2 ;
- la figure 5 est une vue simplifiée de trois quart face d'un deuxième dispositif de commande de la buse de sortie de vapeur ; et
- la figure 6 est une vue simplifiée de trois quart arrière du dispositif de commande représenté à la figure 5.

Sur les différentes figures, on a conservé des références identiques pour désigner des éléments identiques ou similaires.

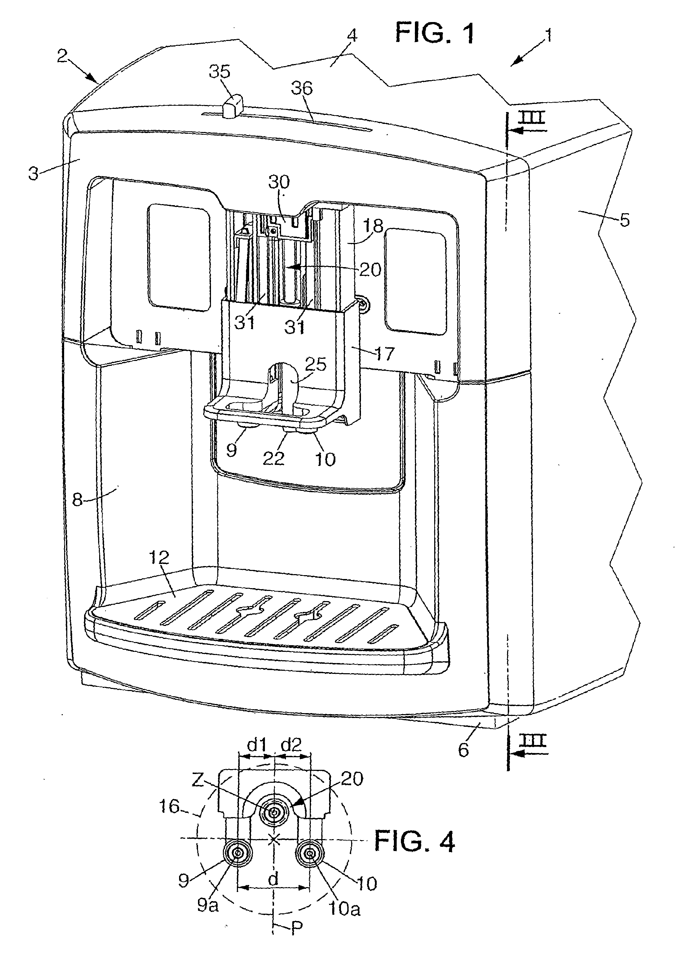

A la figure 1, est représentée une machine à café 1 qui comprend un boîtier 2 présentant une face frontale 3, une face supérieure 4, des faces latérales 5 et un socle 6.

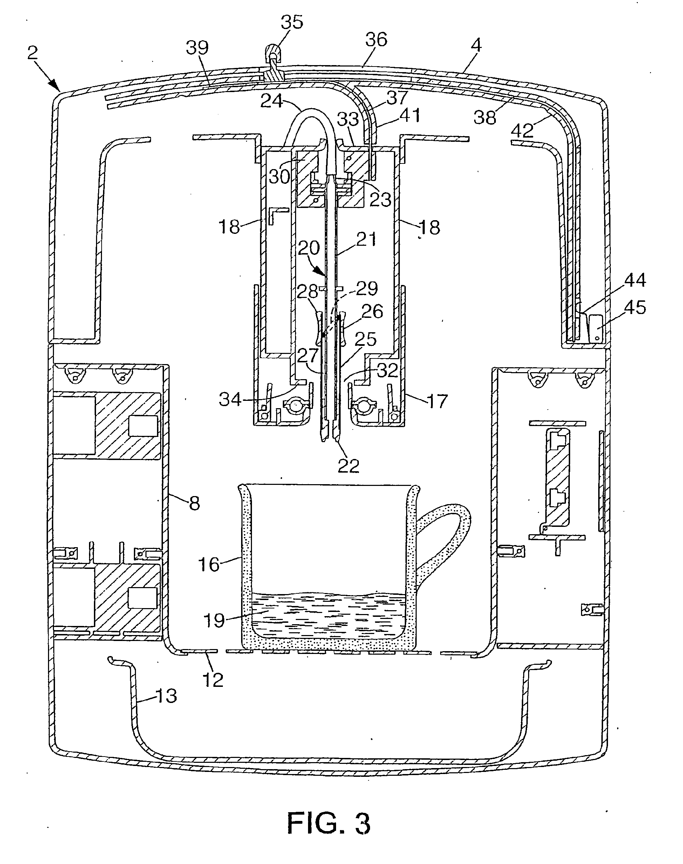

La face frontale 3 du boîtier présente une niche 8 qui est munie dans sa partie supérieure de deux sorties de café identiques (9, 10) et qui est délimitée dans sa partie inférieure par un plateau repose tasses 12. Le plateau repose tasses 12 est une grille métallique ajourée sous laquelle est disposé un tiroir de récupération 13, visible sur la figure 3, dans lequel est récupérée l'infusion de café s'écoulant éventuellement en dehors des tasses.

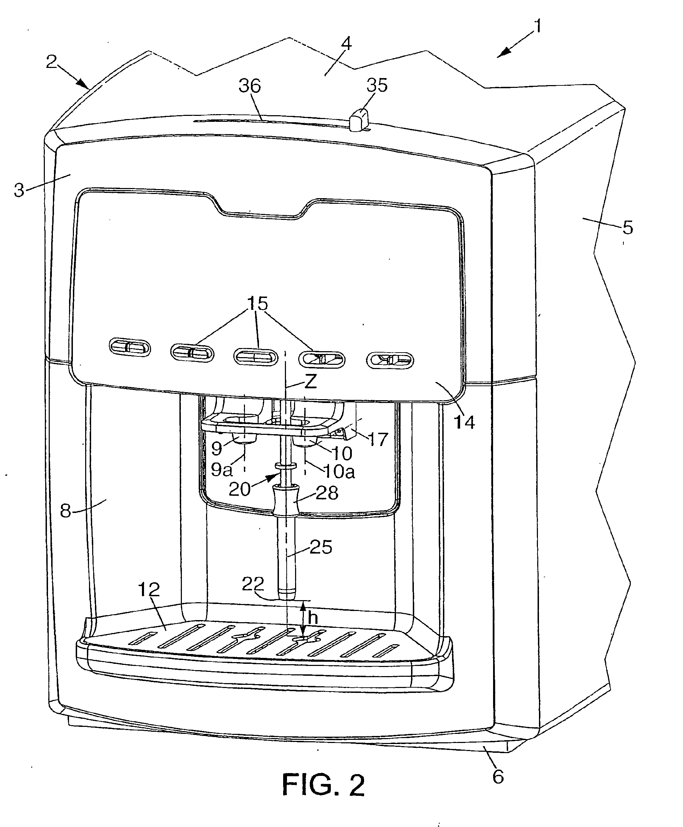

La face frontale 3 du boîtier comporte en outre un panneau de commande 14, visible sur la figure 2, muni de boutons 15 permettant notamment de commander la production d'une quantité plus ou moins importante de café et de commander la production de vapeur par la machine.

On notera que la face frontale 3 du boîtier pourrait présenter une configuration sensiblement différente, sans niche. Par exemple, une partie supérieure de la face frontale pourrait s'avancer de manière proéminente par rapport à une partie médiane en retrait, les sorties de café étant agencées sous cette partie supérieure, et une partie inférieure pourrait s'avancer dans le prolongement du socle sur laquelle serait disposé le plateau repose tasses ; ou encore, une partie médiane en retrait pourrait s'étendre jusqu'au socle, les tasses étant alors disposées sur le plan de travail sur lequel repose la machine.

S'agissant d'une machine à café automatique, le boîtier 2 comporte de manière connue une réserve de café en grains, un dispositif de production de café moulu et de transfert de celui-ci dans une chambre de percolation, un dispositif de production et d'injection d'eau chaude dans la chambre de percolation, un système de conduits permettant d'amener l'infusion de café de la chambre de percolation aux sorties de café, un dispositif d'éjection de la mouture de café, un dispositif de production de vapeur sous pression, ainsi qu'un dispositif de contrôle électronique adapté à commander le fonctionnement de ces dispositifs qui ne sont pas visibles sur les figures. Un tel système de production de café pourrait également être de tout autre type connu, tel que par exemple un système utilisant des cartouches de café, ou du café moulu placé dans une cuillère pour machine de type espresso.

Les deux sorties de café (9, 10) sont disposées parallèlement l'une à l'autre en s'étendant chacune verticalement vers le bas et sont situées à une hauteur suffisamment importante du plateau repose tasses 12 pour qu'une tasse 16 (figure 3), ou deux tasses, puisse être placée sous celles-ci. Le café produit de la chambre de percolation est amené par le système de conduits aux deux sorties (9, 10) par lesquelles le café s'écoule par gravité dans la tasse.

Comme cela est mieux visible à la figure 4, la distance d mesurée horizontalement entre les deux sorties de café (9, 10) est inférieure au diamètre intérieur d'une tasse à café standard, schématiquement représenté par le trait discontinu 16, et de la plupart des récipients pour boissons à base de café dont le diamètre intérieur du débouché est généralement compris entre 50 et 80 millimètres. Ainsi, il n'est pas nécessaire d'obturer l'une des sorties de café lorsque l'utilisateur souhaite préparer un seul café. Les deux sorties de café (9, 10) sont séparées d'une distance suffisante pour pouvoir placer deux tasses côte à côte de manière à ce que le café s'écoulant de chacune des sorties soit reçu dans la tasse correspondante.

Dans le mode de réalisation représenté, les deux sorties de café (9, 10) sont montées sur un support 17 qui coulisse le long d'ailes verticales 18 fixées au boîtier 2, de manière à ce que les sorties de café (9, 10) puissent être déplacées verticalement. Ce montage mobile des sorties de café n'est pas absolument nécessaire, mais permet de positionner les sorties (9, 10) suffisamment haut pour placer des tasses de type "café au lait" dont la hauteur peut atteindre 14 cm, et d'abaisser les sorties du café pour qu'elles soient légèrement au-dessus de tasses de type "espresso" de manière à ce que le café s'écoule dans celles-ci sans provoquer des éclaboussures. Dans ce cas, le système de conduits s'étendant depuis la chambre de percolation est adapté à suivre les déplacements des sorties (9, 10), par exemple à l'aide d'un élément tubulaire débouchant dans un puits mobile verticalement avec les sorties (9, 10).

La machine à café 1 comprend de plus une buse 20 de sortie de vapeur. Comme on le voit mieux à la figure 3, la buse 20 comprend un tube métallique rectiligne 21, un nez 22 fixé à l'extrémité inférieure du tube 21 et un téton 23 fixé à l'extrémité supérieure du tube 21 et sur lequel est emmanché un tube souple 24, par exemple en silicone, qui assure une liaison entre un générateur de vapeur (non représenté) et la buse 20 via une électrovanne non représentée. Le nez 22 de la buse 20 présente un orifice principal calibré pour créer un jet de vapeur et forme l'extrémité libre de la buse 20 qui est susceptible d'être plongée dans la tasse 16 contenant du lait 19.

La buse 20 est montée mobile par rapport au boîtier 2 de la machine selon un axe vertical Z entre une position relevée représentée à la figure 1 et une position abaissée représentée à la figure 2.

En position relevée, l'extrémité libre 22 de la buse 20 est approximativement à la hauteur des sorties de café (9, 10) ou située à une hauteur légèrement inférieure, mais elle ne doit pas gêner le placement d'une tasse sur le plateau repose tasses 12. Il est aussi possible de prévoir une position relevée plus haute, de manière à ce que la buse 20 soit complètement rétractée dans le boîtier 2.

Comme cela est mieux visible à la figure 4, l'axe vertical Z de déplacement de la buse 20 est agencé à proximité des .sorties de café (9, 10), c'est-à-dire à une distance horizontale (d1, d2) de chacun des axes verticaux (9a, 10a) passant par le centre des sorties de café (9, 10), qui est inférieure au diamètre du débouché d'une tasse à café. Par exemple, dans le mode de réalisation représenté, les distances d1 et d2 sont chacune d'environ 30 mm, ce qui est nettement inférieur au diamètre intérieur d'une tasse qui est généralement compris entre 50 et 80 mm.

Plus particulièrement, dans le mode de réalisation représenté à la figure 4, l'axe Z de déplacement de la buse de sortie de vapeur 20 est situé dans le plan vertical médian P séparant les deux sorties de café (9, 10). Dans le cas d'une machine à café ne comportant qu'une seule sortie de café, seule la distance entre l'axe de cette sortie de café et l'axe de déplacement Z de la buse doit être inférieure au diamètre d'une tasse.

La buse 20 est en outre entourée par un manchon 25 s'étendant depuis l'extrémité libre 22 de la buse jusqu'à une position longitudinale intermédiaire du tube 21. Le manchon 25 présente une entrée d'air 26 (figure 3) située à son extrémité supérieure, ou du moins à une distance suffisante de l'extrémité libre 22 de la buse pour que l'entrée d'air 26 ne soit pas immergée dans le lait lorsque l'extrémité libre 22 de la buse est plongée dans la tasse. Le manchon 25 forme ainsi un conduit d'air 27, qui est prolongé dans le nez 22 par des canaux débouchant à proximité de l'orifice principal de sortie de vapeur, de manière à ce que de l'air soit entraîné avec le jet de vapeur lorsque l'entrée d'air 26 est en communication avec l'atmosphère.

Le manchon 25 comporte également une commande d'air 28 (figure 3) mobile entre une position dite cappuccino pour laquelle le conduit d'air 27 est en communication avec l'atmosphère et une position dite latte pour laquelle le conduit d'air 27 est obturé.

Dans le mode de réalisation représenté à la figure 3, la commande d'air 28 est solidaire du manchon 25. L'ensemble (25, 28) ainsi formé est monté rotatif par rapport à la buse 20 de sorte que l'entrée d'air 26 formée à travers la commande 28 et le manchon 25 soit située au-dessous d'un moyen d'étanchéité 29 disposé de manière oblique entre le tube 21 et la commande d'air 28 en position cappuccino, et située au-dessus du moyen d'étanchéité 29 lorsque la commande d'air 28 est en position latte.

A l'intérieur du boîtier 2 est agencé un dispositif de guidage de la buse 20 à déplacement vertical. Ce dispositif de guidage comprend un chariot coulissant 30 sur lequel est fixée la buse et des ailes verticales 31, visibles sur la figure 2, constituant des guides le long desquels coulisse verticalement le chariot 30.

Le boîtier 2 présente une ouverture 32 (figure 3) qui est ménagée à l'extrémité inférieure des ailes et à travers laquelle peuvent passer la buse 20, le manchon 25 et la commande d'air 28.

Cette disposition présente l'avantage de protéger le dispositif de guidage et la majeure partie de la buse en position relevée, à l'intérieur du boîtier 2. Toutefois, il est parfaitement envisageable que la buse soit montée mobile sur un support situé à l'extérieur du boîtier. Par exemple, il pourrait s'agir d'un support monté de manière articulée sur la face frontale 3 du boîtier, comprenant éventuellement plusieurs portions de conduit articulées entre elles, et à l'extrémité duquel la buse serait montée mobile, notamment de manière télescopique. La base d'un tel support pourrait être située à distance des sorties de café, la ou les articulations du support permettant d'amener la buse dans l'espace situé sous les sorties de café, lorsque l'utilisateur souhaite injecter de la vapeur dans une tasse.

La course verticale de la buse est définie par le chariot 30 coulissant le long des guides verticaux 31, des butées supérieure 33 et inférieure 34 étant disposées aux extrémités des guides 31. La butée inférieure 34 est située à une distance du plateau repose tasses 12 qui est déterminée de manière à ce que la distance minimale h séparant l'extrémité libre 22 du plateau repose tasses 12 lorsque la buse 20 est en position complètement abaissée, ne soit pas inférieure à une valeur minimale. Ainsi, l'extrémité libre 22 de la buse ne vient pas en appui contre le fond de la tasse, ce qui pourrait gêner la sortie de vapeur. La distance minimale h doit tenir compte du fait que les tasses à café présentent un fond plus ou moins épais, mais ne doit pas être trop importante pour que l'extrémité libre 22 de la buse plonge effectivement dans le lait, même si la tasse 16 ne contient qu'une faible quantité de lait 19 comme représenté à la figure 3. De préférence, on choisit pour la distance minimale h une valeur comprise entre 10 et 20 mm.

On notera que le déplacement du chariot 30 est indépendant du déplacement du support 17 des sorties de café (9, 10), de sorte que la position des sorties de café (9, 10) n'a pas d'influence sur la course de la buse 20.

Il est envisageable de déplacer la buse de sortie de vapeur 20 à l'aide d'un organe de préhension solidaire de celle-ci. Toutefois, du fait de la présence des sorties de café (9, 10) à proximité de la buse 20, et dans le but de limiter les risques de contact avec des parties chaudes ou salies, on préfère utiliser un bouton de commande manuelle qui est relié à la buse 20 par un dispositif de commande.

Dans un premier mode de réalisation représenté aux figures 1 à 3, le bouton de commande manuelle 35 est monté mobile le long d'une fente horizontale 36 formée sur la face supérieure 4 du boîtier 2. Comme le montre la figure 3, l'extrémité inférieure du bouton 35 est fixée à une première bande flexible 37 qui est reliée à une deuxième bande flexible 38 par une extrémité commune 39. La bande 37 est adaptée à coulisser dans un guide 41 orienté vers le chariot mobile 30 supportant la buse 20, et l'extrémité de la bande 37 est fixée au chariot 30, de sorte que le déplacement du bouton de commande manuelle 35 est intégralement transmis à la buse 20. L'utilisation d'un élément flexible mobile dans un guide permet de prévoir une grande distance et un cheminement complexe entre le bouton de commande manuelle 35 et la buse 20.

La bande 38 est mobile dans un guide 42 qui présente en extrémité une ouverture à travers laquelle passe le bras 44 d'un micro-interrupteur 45. Le micro-interrupteur 45 est relié au dispositif de contrôle de la machine. La bande 38 vient coopérer avec le bras 44 du micro-interrupteur lorsque la buse 20 est en position abaissée, ce qui fournit au dispositif de contrôle une information sur la position de la buse. Le dispositif de contrôle est alors adapté pour ne pas commander l'ouverture de l'électrovanne agissant sur la sortie de vapeur lorsqu'il ne reçoit pas une information indiquant que la buse 20 est en position abaissée, même si l'utilisateur actionne un bouton 15 de commande de vapeur. Ainsi, la sortie d'un jet de vapeur ne peut avoir lieu que lorsque la buse 20 est abaissée, c'est-à-dire bien visible et à proximité du plateau repose tasses 12.

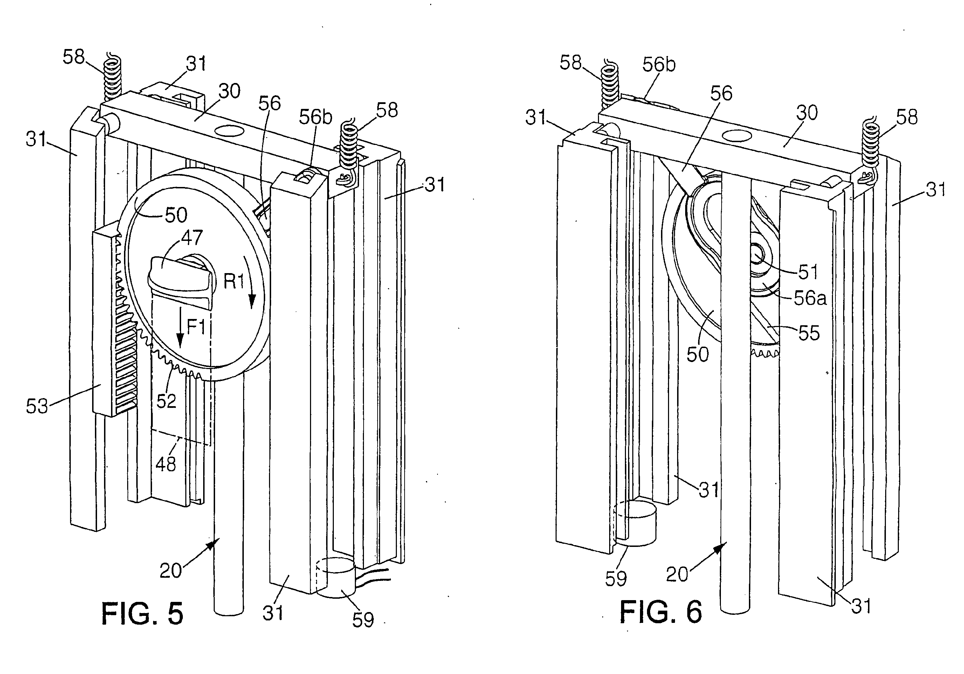

Dans un deuxième mode de réalisation préféré du dispositif de commande de la buse 20 de sortie de vapeur, représenté aux figures 5 et 6, le bouton de commande manuelle 47 est monté mobile à travers une fente verticale 48 formée dans la face frontale du boîtier, de préférence dans la partie supérieure de la face frontale située au niveau de la buse 20. Comme dans le précédent mode de réalisation, la buse 20 est solidaire d'un chariot 30 mobile le long de guides verticaux 31.

Dans ce deuxième mode de réalisation, figures 5 et 6, le dispositif de commande de la buse 20 comprend un disque 50 monté rotatif autour d'un axe 51 solidaire du bouton 47 et présentant un secteur denté 52 qui engrène avec une crémaillère fixe 53. Comme cela est visible sur la figure 6, la face arrière du disque 50 présente un guide 55 s'étendant selon un diamètre dans lequel une manivelle 56 peut effectuer un mouvement de translation, mais ne peut pas effectuer de mouvement de rotation par rapport au disque 50. Une première extrémité 56a de la manivelle 56 comporte un oeillet allongé à travers lequel passe l'axe de rotation 51 du disque 50, tandis qu'une deuxième extrémité 56b de la manivelle 56 est fixée de manière pivotante au chariot 30.

Lorsque l'utilisateur abaisse le bouton de commande 47 selon la flèche F1 de la figure 5, le disque 50 effectue une rotation donnée selon la flèche R1 de la figure 5 du fait de son engrènement avec la crémaillère 53, et la manivelle 56 effectue une rotation de même amplitude. Du fait que le bras de levier de la manivelle 56 est plus important que le rayon du secteur denté du disque 50, l'abaissement du bouton de commande 47 entraîne un déplacement amplifié du chariot 30. La possibilité de translation de la manivelle 56 dans le guide 55 du disque autorise un déplacement en translation de la deuxième extrémité 56b de la manivelle le long d'un guide vertical 31.

Ce dispositif de commande présente d'une part l'avantage de réduire l'amplitude du mouvement que doit effectuer l'utilisateur pour abaisser la buse sur une course donnée, et d'autre part, est plus intuitif pour l'utilisateur car l'abaissement de la buse 20 est commandé par l'abaissement du bouton 47 selon la même direction.

Le chariot 30 est rappelé élastiquement vers le haut par des ressorts de traction 58 partiellement représentés aux figures 5 et 6. De plus, il est prévu un électro-aimant 59 agencé à l'extrémité inférieure d'un guide vertical 31 et adapté à retenir par aimantation le chariot 30 qui peut être réalisé soit en matériau ferromagnétique ou comporter une culasse magnétique. Mais il est possible de prévoir d'autre type de moyen de retenue électromagnétique du chariot 30, comme par exemple un actionneur électromécanique comportant un doigt venant en contact mécanique avec le chariot 30, du moment que la libération du chariot puisse être commandée simplement par un signal électrique.

Lorsque le bouton 47 est abaissé jusqu'à ce que le chariot 30 vienne en contact avec l'électro-aimant 59, le dispositif de contrôle de la machine alimente l'électro-aimant de manière à maintenir le chariot 30 dans la position correspondant à la position abaissée de la buse 20. L'alimentation de l'électro-aimant 59 peut être commandée par un micro-interrupteur placé sur la course du chariot 30 et relié au dispositif de contrôle électronique de la machine. Lorsque l'opération d'injection de vapeur est terminée, le dispositif de contrôle coupe l'alimentation de l'électro-aimant 59, ce qui entraîne un retour du chariot 30, et par conséquent de la buse 20 en position relevée sous l'action des ressorts 58. Ainsi, le relevage de la buse peut être automatisée. Il est également envisageable de prévoir une commande entièrement automatisée des mouvements d'abaissement et de relevage de la buse. Toutefois, cela ferait appel à une commande motorisée qui entraînerait un coût de fabrication sensiblement supérieur à celui de l'automatisation réalisée à l'aide des ressorts de traction 58 et de l'électro-aimant 59.

Pour préparer un cappuccino ou un café au lait à l'aide de la machine décrite ci-dessus, l'utilisateur place une tasse 16 partiellement remplie de lait 19 sur le plateau repose tasses 12. Il abaisse la buse de sortie de vapeur 20 en déplaçant le bouton de commande 35 de la gauche vers la droite dans le mode de réalisation représenté aux figures 1 à 3, ou en déplaçant le bouton de commande 47 de haut en bas dans le cas d'un dispositif de commande réalisé selon les figures 5 et 6.

L'extrémité libre 22 de la buse est alors située à une distance minimale h du plateau repose tasses 12 de sorte qu'elle plonge dans le lait contenu dans la tasse 16.

L'utilisateur place la commande d'air 28 en position cappuccino ou en position latte selon la boisson qu'il veut préparer.

Ensuite, il commande à l'aide d'un des boutons 15 la sortie de vapeur par la buse 20. Le dispositif de contrôle qui reçoit un signal du micro-interrupteur 45 (figure 3) indiquant que la buse 20 est en position abaissée, commande l'ouverture de l'électrovanne de sortie de vapeur, soit pendant le temps d'actionnement du bouton de commande de vapeur, soit pendant une durée mémorisée par le dispositif de contrôle.

Si la commande d'air 28 est en position cappuccino, de la vapeur et de l'air sont injectés dans le lait et créent une émulsion du lait. Si la commande d'air 28 est en position latte, uniquement de la vapeur est injectée dans le lait, ce qui permet de réchauffer celui-ci.

Ensuite, l'utilisateur peut commander manuellement le retour de la buse de vapeur 20 en position relevée. Ce retour de la buse en position relevée peut également être réalisé automatiquement dans le cas d'une machine comportant un dispositif de commande selon le deuxième mode de réalisation.

La production de café est ensuite déclenchée, soit manuellement par l'utilisateur, soit selon une séquence automatisée qui est mémorisée par le dispositif de contrôle de la machine. Le café s'écoule alors par les sorties de café (9, 10) et est recueilli dans la tasse.

On notera qu'avec des sorties de café adaptées pour laisser couler le café selon un filet régulier, la mousse formée par l'émulsion de lait n'est pas détruite par l'écoulement du café, mais surnage à la surface du café comme cela est désiré pour un cappuccino.

Contrairement aux machines de l'art antérieur dans lesquelles la buse de sortie de vapeur est généralement placée sur le côté de la machine, l'utilisateur n'a pas eu à déplacer la tasse au cours de la préparation d'un cappuccino ou d'un café au lait. De plus, le fait de rétracter la buse de sortie de vapeur 20 dans le boîtier 2 de la machine permet de protéger la buse 20 contre les chocs et de réduire l'encombrement de la machine.

Bien entendu, les modes de réalisation décrits ci-dessus ne sont nullement limitatifs. Il est parfaitement envisageable de commander les déplacements de la buse par un système motorisé, ou manuellement à l'aide d'un organe de préhension directement fixé à la buse.

## Revendications

1. Machine à café comportant un boîtier (2) comprenant au moins une sortie de café (9;10) par laquelle une infusion de café est susceptible de s'écouler dans une tasse (16), un générateur de vapeur, et une buse (20) de sortie de vapeur mobile par rapport au boîtier et reliée au générateur de vapeur, ladite buse (20) présentant une extrémité libre (22) susceptible d'être plongée dans la tasse, **caractérisée en ce que** l'extrémité libre (22) de la buse (20) est susceptible d'être amenée dans l'espace situé sous la sortie de café (9;10) et d'être déplacée par translation entre une position relevée dans laquelle ladite extrémité libre (22) est au moins sensiblement au niveau de la sortie de café (9;10), et une position abaissée dans laquelle ladite extrémité libre (22) est susceptible de plonger dans la tasse (16) positionnée de manière à recevoir l'infusion de café.

2. Machine à café selon la revendication 1, dans laquelle la buse (20) de sortie de vapeur est mobile selon un axe (Z) sensiblement vertical agencé à proximité de la sortie de café (9;10).

3. Machine à café selon la revendication 2, dans laquelle le boîtier (2) comprend deux sorties de café (9,10), et dans laquelle la buse (20) est située sensiblement dans le plan vertical médian (P) séparant les deux sorties de café.

4. Machine à café selon la revendication 2 ou 3, dans laquelle le boîtier (2) contient un dispositif de guidage de la buse (20) comprenant un guide vertical (31) le long duquel la buse (20) est montée mobile, ladite buse (20) en position abaissée faisant saillie à travers une ouverture (32) pratiquée dans ledit boîtier.

5. Machine à café selon l'une quelconque des revendications 2 à 4, dans laquelle la course verticale de la buse (20) de la position relevée vers la position abaissée, est adaptée pour que l'extrémité libre (22) de la buse soit située à une distance minimale déterminée (h) du plan destiné à recevoir la tasse, ladite distance minimale (h) étant de préférence comprise entre 10 et 20 mm.

6. Machine à café selon l'une quelconque des revendications précédentes, dans laquelle un bouton de commande manuelle (35;47) est monté mobile sur le boîtier (2) et est relié à la buse (20)' par un dispositif de commande (37,41;50,53,56) adapté à déplacer la buse au moins de la position relevée à la position abaissée lorsque le bouton de commande (35;47) est actionné.

7. Machine à café selon la revendication 6, dans laquelle le dispositif de commande (37,41;50,53,56) est adapté à entraîner un déplacement amplifié de la buse (20) par rapport au déplacement du bouton de commande (35;47).

8. Machine à café selon la revendication 6 ou 7, dans laquelle le boîtier (2) présente une face frontale (3) sur laquelle est pratiquée une fente sensiblement verticale (48) le long de laquelle coulisse le bouton de commande (47), le passage du bouton de commande (47) d'une position haute à une position basse entraînant le déplacement de la buse (20) de la position relevée à la position abaissée.

9. Machine à café selon l'une quelconque des revendications 6 à 8, dans laquelle, la buse (20) est rappelée en position relevée par un moyen de rappel élastique (58), et est adaptée à coopérer avec un dispositif de retenue électromagnétique (59), ledit dispositif de retenue (59) étant adapté à maintenir la buse (20) en position abaissée et à libérer ladite buse à la suite de la réception d'un signal émis par un premier dispositif de contrôle.

10. Machine à café selon l'une quelconque des revendications précédentes, dans laquelle un moyen de détection (45) de la position abaissée de la buse (20) est relié à un second dispositif de contrôle commandant la sortie de vapeur par la buse, ledit second dispositif de contrôle étant adapté à interdire la sortie de vapeur lorsque le moyen de détection (45) indique que la buse (20) n'est pas en position abaissée.

## Claims

1. Coffee machine having a housing (2) comprising at least one coffee outlet (9; 10) through which a coffee infusion is able to flow into a cup (16), a steam generator, and a steam outlet nozzle (20) able to move with respect to the housing and connected to the steam generator, the said nozzle (20) having a free end (22) able to be immersed in the cup, **characterised in that** the free end (22) of the nozzle (20) is able to be brought into the space situated under the coffee outlet (9; 10) and to be moved by translation between a raised position in which the said free end (22) is at least substantially level with the coffee outlet (9; 10), and a lowered position in which the said free end (22) is able to be immersed in the cup (16) positioned so as to receive the coffee infusion.

2. Coffee machine according to claim 1, in which the steam outlet nozzle (20) is able to move along a substantially vertical axis (Z) arranged close to the coffee outlet (9; 10).

3. Coffee machine according to claim 2, in which the housing (2) comprises two coffee outlets (9; 10) and in which the nozzle (20) is situated substantially in the vertical mid plane (P) separating the two coffee outlets.

4. Coffee machine according to claim 2 or 3, in which the housing (2) contains a device for guiding the nozzle (20) comprising a vertical guide (31) along which the nozzle (20) is mounted so as to be able to move, the said nozzle (20) in the lowered position projecting through an opening (32) formed in the said housing.

5. Coffee machine according to any one of claims 2 to 4, in which the vertical travel of the nozzle (20) from the raised position to the lowered position is adapted so that the free end (22) of the nozzle is situated at a given minimum distance (h) from the surface intended to receive the cup, the said minimum distance (h) preferably being between 10 and 20 mm.

6. Coffee machine according to any one of the preceding claims, in which a manual control knob (35; 45) is mounted movably on the housing (2) and is connected to the nozzle (20) by a control device (37, 41; 50, 53, 56) adapted to move the nozzle at least from the raised position to the lowered position when the control knob (35; 47) is actuated.

7. Coffee machine according to claim 6, in which the control device (37, 41; 50, 53, 56) is adapted to cause an amplified movement of the nozzle (20) compared with the movement of the control knob (35; 47).

8. Coffee machine according to claim 6 or 7, in which the housing (2) has a front face (3) on which a substantially vertical slot (48) is formed, along which the control knob (47) slides, the passage of the control knob (47) from a high position to a low position causing the movement of the nozzle (20) from the raised position to the lowered position.

9. Coffee machine according to any one of claims 6 to 8, in which the nozzle (20) is returned to the raised position by an elastic return means (58) and is adapted to cooperate with an electromagnetic holding device (59), the said holding device (59) being adapted to hold the nozzle (20) in the lowered position and to release the said nozzle following the reception of a signal transmitted by a first control device.

10. Coffee machine according to any one of the preceding claims, in which a means (45) of detecting the lowered position of the nozzle (20) is connected to a second control device controlling the steam outlet through the nozzle, the said second control device being adapted to prevent the outlet of steam when the detection means (45) indicates that the nozzle (20) is not in the lowered position.

## Patentansprüche

1. Kaffeemaschine mit einem Gehäuse (2), welches wenigstens einen Kaffeeausgang (9; 10) aufweist, über den ein Kaffeeaufguss in eine Tasse (16) fließen kann, einem Stromerzeuger und einer Düse (20) zum Ausgeben von Dampf, welche relativ zu dem Gehäuse beweglich und mit dem Dampferzeuger verbunden ist, wobei die Düse (20) ein freies Ende (22) aufweist, welches in die Tasse getaucht werden kann, **dadurch gekennzeichnet, dass** das freie Ende (22) der Düse (20) in den Raum geführt werden kann, der unter dem Kaffeeausgang (9; 10) liegt, und durch Translation zwischen einer angehobenen Position, in der das freie Ende (22) wenigstens ungefähr auf der Höhe des Kaffeeausgangs (9, 10) liegt, und einer abgesenkten Position, in der das freie Ende (22) in die Tasse (10) eintauchen kann, wobei die Tasse so angeordnet ist, dass sie den Kaffeeaufguss empfängt, verschiebbar ist.

2. Kaffeemaschine nach Anspruch 1, wobei die Düse (22) für die Dampfabgabe entlang einer Achse (Z) bewegbar ist, welche ungefähr vertikal in der Nähe des Kaffeeausgangs (9; 10) angeordnet ist.

3. Kaffeemaschine nach Anspruch 2, wobei das Gehäuse (2) zwei Kaffeeausgänge (9, 10) aufweist und wobei die Düse (20) ungefähr in der vertikalen Mittelebene (P) liegt, welche die zwei Kaffeeausgänge trennt.

4. Kaffeemaschine nach Anspruch 2 oder 3, wobei das Gehäuse (2) eine Vorrichtung zur Führung der Düse (20) umfasst, welche eine vertikale Führung (21) aufweist, entlang der die Düse (20) beweglich montiert ist, wobei die Düse (20) in der abgesenkten Position über eine Öffnung (23), die in dem Gehäuse ausgebildet ist, vorsteht.

5. Kaffeemaschine nach einem der Ansprüche 2 bis 4, wobei der vertikale Verlauf der Düse (20) von der angehobenen Position zu der abgesenkten Position so eingerichtet ist, dass das freie Ende (22) der Düse bei einem vorgegebenen minimalen Abstand (h) zu der Ebene, welche die Tasse aufnimmt, liegt, wobei der minimale Abstand (h) vorzugsweise zwischen 10 und 20 mm liegt.

6. Kaffeemaschine nach einem der vorangehenden Ansprüche, wobei ein manueller Steuerknopf (35; 47) beweglich auf dem Gehäuse (2) montiert und über eine Steuervorrichtung (37, 41; 50, 53, 56) mit der Düse (20) verbunden ist, wobei die Steuervorrichtung die Düse wenigstens von der angehobenen Position zu der abgesenkten Position verschieben kann, wenn der Steuerknopf (35; 47) betätigt wird.

7. Kaffeemaschine nach Anspruch 6, wobei die Steuervorrichtung (37, 41; 50, 56, 56) dazu eingerichtet ist, eine im Verhältnis zu der Verschiebung des Steuerknopfes (35; 47) verstärkte Verschiebung der Düse (20) zu bewirken.

8. Kaffeemaschine nach Anspruch 6 oder 7, wobei das Gehäuse (2) eine Vorderseite (3) aufweist, auf der ein im Wesentlichen vertikaler Schlitz (48) ausgebildet ist, entlang dem der Steuerknopf (47) gleitet, wobei der Durchgang des Steuerknopfes (47) von einer oberen Position zu einer unteren Position die Verschiebung der Düse (20) von der angehobenen Position zu der abgesenkten Position bewirkt.

9. Kaffeemaschine nach einem der Ansprüche 6 bis 8, wobei die Düse (20) durch eine elastische Rückstelleinrichtung (58) in die angeobene Position zurückgeführt wird und dazu eingerichtet ist, mit einer elektromagnetischen Rückstellvorrichtung (59) zusammenzuwirken, wobei die Rückstellvorrichtung (59) dazu eingerichtet ist, die Düse (20) in der abgesenkten Position zu halten und die Düse nach dem Empfang eines Signals, welches von einer ersten Steuereinrichtung ausgegeben wird, freizugeben.

10. Kaffeemaschine nach einem der vorangehenden Ansprüche, wobei eine Vorrichtung zur Erfassung (45) der abgesenkten Position der Düse (20) mit einer zweiten Steuereinrichtung verbunden ist, welche die Dampfabgabe durch die Düse steuert, wobei die zweite Steuervorrichtung dazu eingerichtet ist, die Dampfabgabe zu sperren, wenn die Erfassungsvorrichtung (45) anzeigt, dass die Düse (20) nicht in der abgesenkten Position ist.
